# EUROPEAN PATENT APPLICATION

(11) **EP 1 462 419 A2**
(43) Date of publication of application: **29.09.2004**
(21) Application number: 04250905.9
(22) Date of filing: 20.02.2004
(51) Int. Cl.: C03B 11/08

(54) **Method for making holder/optical-element assembly**

(30) Priority: 25.03.2003 JP 2003081971
(71) Applicant: ALPS ELECTRIC CO., LTD., Ota-ku Tokyo 145 (JP)
(72) Inventor: Kikuchi, Kimihiro, Ota-ku Tokyo (JP)
(74) Representative: Kensett, John Hinton

(57) **Abstract**

A method for making a holder/optical-element assembly (1) includes the steps of positioning a cylindrical holder material (10a) in a press-molding die (A, B, C), the holder material having a void part (14) in the inner circumferential surface, positioning an optical-element material (20a) inside the holder material, heating the holder material and the optical-element material to their own softening temperatures, press-molding the holder material and the optical-element material, which are heated, to form a cylindrical holder (10) and an optical element (20), respectively, thereby fixing the optical element to the inside of the holder, allowing a part of the optical element to project outwardly from the outer edge by pressure created in press-molding, and retaining the projected portion in the void part of the holder.

## Description

### BACKGROUND OF THE INVENTION

### 1. Field of the Invention

The present invention relates to methods for making a holder/optical-element assembly wherein an optical element and a holder are integrated. In particular, the present invention relates to a method for making a holder/optical-element assembly, in which the holder/optical-element assembly is formed by press-molding an optical-element material in a holder.

### 2. Description of the Related Art

A high mounting accuracy is required in mounting an optical element, such as a lens, to a pickup head of a compact disc (CD) player or to a digital camera. To satisfy such a requirement, a holder/optical-element assembly, wherein an optical element is held by a holder, is generally produced to achieve a required mounting accuracy using this holder. Japanese Patent No. 2793433 (in particular, Fig. 3) shows an example of a method for making such a holder/optical-element assembly, wherein an optical-element material is positioned and heated in the interior of a cylindrical holder material, the holder material and the optical-element material are press-molded with a die to form an optical element and mounting surfaces of a holder, and the optical element is fixed to the holder by applying pressure.

In press-molding an optical-element material, volume error of the optical-element material causes undesirable changes in thickness of the optical element. This not only deteriorates the optical performance but also causes the need for adjustment and fixing to achieve an appropriate optical position. To solve such problems with performance and positioning, there is a method for reducing the volume error by improving the accuracy of the material volume of the optical element. To ensure the effect of this method, however, the accuracy of the material volume of the optical element must be improved and a holder must be shaped with a high accuracy.

### SUMMARY OF THE INVENTION

The present invention is made in light of the problems described above. An object of the present invention is to provide a method for making a high-accuracy holder/optical-element assembly wherein the volume error of the optical-element material is correctable and the error of the holder shape is minimized.

To solve the above-described problems, the present invention includes the steps of positioning a cylindrical holder material in a press-molding die, the holder material having a void part in the inner circumferential surface, positioning an optical-element material inside the holder material, heating the holder material and the optical-element material to their own softening temperatures, and press-molding the holder material and the optical-element material, which are heated, to form a cylindrical holder and an optical element, respectively, thereby fixing the optical element to the inside of the holder, allowing a part of the optical element to project outwardly from the outer edge by pressure created in press-molding, and retaining the projected portion in the void part of the holder.

Preferably, pressure created in press-molding allows a part of the optical element to flow into the void part of the holder to form the projected portion of the optical element.

Preferably, reference surfaces for mounting the above-described holder/optical-element assembly along the optical axis and in the radial direction are formed in the outer surface of the holder by press-molding the holder material.

Preferably, an extra amount of the optical-element material is added, in advance, to the volume required for forming the optical element, and pressure created in press-molding allows the extra amount to flow into the void part of the holder to form the projected portion of the optical element.

Preferably, the holder material has a filling concavity in the inner circumferential surface, the filling concavity included in the void part for retaining the projected portion of the optical element.

Preferably, the holder material has a plurality of micro-pores on the entire inner circumferential surface, the pores included in the void part for retaining the projected portion of the optical element.

Preferably, the holder material has a plurality of the micro-pores on a part of the inner circumferential surface, the pores included in a void part for retaining the projected portion of the optical element.

The present invention includes the steps of positioning a cylindrical holder material in a press-molding die, the holder material having a void part in the inner circumferential surface, positioning an optical-element material inside the holder material, heating the holder material and the optical-element material to their own softening temperatures, and press-molding the holder material and the optical-element material, which are heated, to form a cylindrical holder and an optical element, respectively. The holder with higher accuracy can thus be produced compared to that produced through other processes such as a cutting process.

Moreover, since the holder and the optical element are simultaneously press-molded to fix the optical element to the inside of the holder, a mounting reference position of the holder coincides with an optical reference position of the optical element with a high degree of accuracy.

Furthermore, pressure created in press-molding allows a part of the optical element to project outwardly from the outer edge, and the projected portion is retained in the void part of the holder so that the volume error of the optical-element can be absorbed into the void part. The holder/optical-element assembly having an optical element with a high molding accuracy and a desired shape can thus be produced.

Embodiments of the present invention will now be described, by way of example only, with reference to the accompanying diagrammatic drawings, in which:
Fig. 1 is a cross-sectional view of a holder/optical-element assembly according to a first embodiment of the present invention;
Fig. 2 is a cross-sectional view showing an apparatus for producing a holder/optical-element assembly according to the first embodiment of the present invention;
Figs. 3A and 3B are cross-sectional views showing the production of a holder/optical-element assembly according to the first embodiment of the present invention;
Fig. 4 is a cross-sectional view of a holder/optical-element assembly according to a second embodiment of the present invention;
Figs. 5A and 5B are cross-sectional views showing the production of a holder/optical-element assembly according to the second embodiment of the present invention;
Fig. 6 is a cross-sectional view showing a holder/optical-element assembly according to a third embodiment of the present invention; and
Figs. 7A and 7B are cross-sectional views showing the production of a holder/optical-element assembly according to the third embodiment of the present invention.

### DESCRIPTION OF THE PREFERRED EMBODIMENTS

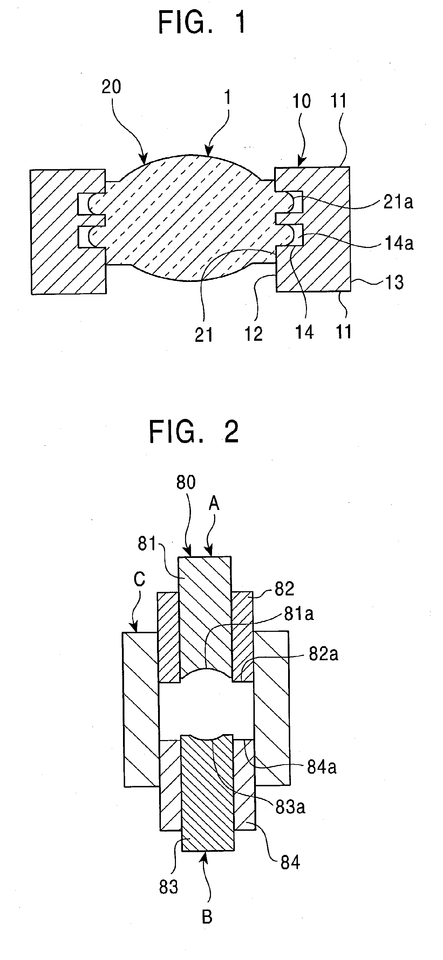

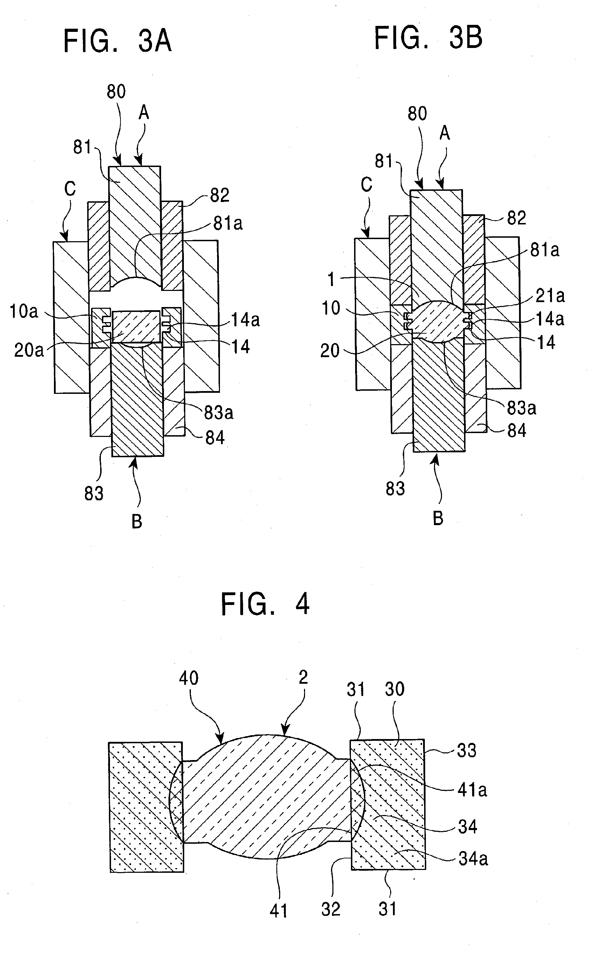

The present invention will now be described with reference to the drawings, starting with a first embodiment. Fig. 1 is a cross-sectional view of a holder/optical-element assembly according to the first embodiment of the present invention. Fig. 2 is a cross-sectional view showing an apparatus for producing a holder/optical-element assembly according to the first embodiment of the present invention. Figs. 3A and 3B are cross-sectional views showing the production of a holder/optical-element assembly according to the first embodiment of the present invention.

A holder/optical-element assembly 1 of the present embodiment is incorporated, for example, in a pickup head of a CD player or in a digital camera. As shown in Fig. 1, the holder/optical-element assembly 1 has a cylindrical lens holder 10 and a spherical lens 20 placed inside the lens holder 10.

The lens holder 10 is provided for retaining the lens 20 and positioning the lens 20 in an optical apparatus, and is made of, for example, aluminum or stainless steel. The lens holder 10 has mounting surfaces 11 and 11 serving as reference surfaces for mounting the lens holder 10 on the optical apparatus along the optical axis, an inner circumferential surface 12 in contact with the lens 20, and an outer-circumferential surface 13 serving as a reference surface for mounting the lens holder 10 on the optical apparatus in the radial direction. The inner circumferential surface 12 has a void part 14 including filling concavities 14a and 14a provided in the circumferential direction. Referring to Fig. 3A, a lens-holder material 10a having the void part 14 including the filling concavities 14a and 14a is formed with a certain level of dimensional accuracy by, for example, a cutting or casting process. The lens-holder material 10a is then press-molded to form the lens holder 10. Accuracy of the lens holder 10 formed by press-molding in the final step is higher than that of the lens holder 10 formed by, for example, a cutting process.

The glass lens 20 is placed inside the lens holder 10. This lens 20 is a biconvex spherical lens and is formed by press-molding a lens material 20a shown in Fig. 3A. The lens 20 is fixed to and integrated with the lens holder 10 by applying pressure created in press-molding. An outer edge 21 of the lens 20 has extra portions 21a outwardly projected from parts of the outer edge 21. This extra portion 21a is retained by the void part 14 described above.

The lens material 20a is made of an optical glass material such as lead oxide glass SFS01. The lens material 20a is designed to include an extra volume in addition to the volume required for forming the lens 20. This extra volume compensates for the volume error in the lens material 20a, and therefore, at least the volume of the lens material 20a required for forming the lens 20 is secured.

Then, molding pressure created in press-molding the lens 20 allows an extra amount of the lens material 20a to flow into the void part 14 including the filling concavities 14a and 14a to form the extra portion 21a. That is, the extra amount of the lens material 20a unnecessary for forming the lens 20 is absorbed into the void part 14. The volume error included in the extra amount of the lens material 20a is also absorbed into the void part 14. The resulting lens 20 has a high molding accuracy and a desired shape.

The void part 14 offers flow resistance to the lens material 20a flowing into the void part 14. When the filling concavity 14a included in the void part 14 has a large width, the void part 14 offers low flow resistance. On the other hand, when the filling concavity 14a has a small width, the void part 14 offers high flow resistance. While two filling concavities 14a are illustrated in Fig. 1, the width and number of the filling concavities 14a depend on, for example, the viscosity of the lens material 20a. That is, flow resistance of the filling concavity 14a to the lens material 20a is controlled by adjusting the width and number of the filling concavity 14a. In this case, the spatial volume of the void part 14 must be larger than the volume of the extra lens material 20a.

High flow resistance prevents the lens material 20a from flowing into the void part 14. The extra amount of lens material 20a, then, directly causes the molding error of the lens 20. On the other hand, low flow resistance allows the lens material 20a to easily flow into the void part 14 under molding pressure, and the void part 14 is filled with the lens material 20a. As described above, the spatial volume of the void part 14 is larger than the volume of the extra lens material 20a. Therefore, when the void part 14 is filled with the lens material 20a, the lens material 20a originally provided for forming the lens 20 also flows into the void part 14, causing molding error of the lens 20. That is, the level of flow resistance of the void part 14 must be determined to allow all the extra lens material 20a to flow into the void part 14 under molding pressure, while allowing no more lens material 20a to flow into the void part 14.

As described above, flow resistance of the void part 14 must be changed depending on the viscosity of the lens material 20a or on the level of molding pressure. That is, when the lens material 20a is press-molded in the vicinity of the glass transition temperature, flow resistance of the void part 14 must be reduced since the fluidity of the lens material 20a is at a low level. On the other hand, when the lens material 20a is press-molded in the vicinity of the glass softening temperature, flow resistance of the void part 14 must be increased since the fluidity of the lens material 20a is at a high level.

Similarly, when molding pressure is at a low level, flow resistance of the void part 14 is adjusted to a low level. When molding pressure is at a high level, flow resistance of the void part 14 is adjusted to a high level. By defining the shape of the void part 14, based on the above-described conditions, such that the void part 14 offers flow resistance leading to a desired performance, flexibility to, for example, changes in the type of lens material 20a can be achieved. Alternatively, the viscosity of the lens material 20a or the molding pressure may be adjusted, if possible.

An apparatus for producing the holder/optical-element assembly 1 will now be described. As shown in Fig. 2, a producing apparatus 80 includes an upper die A, a lower die B, and an outer circumferential die C. The upper die A has an internal upper die 81 and an external upper die 82. The lower die B disposed below the upper die A has an internal lower die 83 opposing the internal upper die 81, and has an external lower die 84 opposing the external upper die 82. The outer circumferential die C is disposed around the upper die A and the lower die B.

The internal upper die 81 and the internal lower die 83 have substantially solid cylindrical shapes. For molding spherical lens surfaces, a transferring surface 81a and a transferring surface 83a are formed at the lower end of the internal upper die 81 and the upper end of the internal lower die 83, respectively. The external upper die 82 and the external lower die 84 have hollow cylindrical shapes. For molding the mounting surfaces 11 and 11 of the lens holder 10, a holder molding surface 82a and a holder molding surface 84a are formed at the lower end of the external upper die 82 and the upper end of the external lower die 84, respectively. The thickness of the external upper die 82 and the external lower die 84 are substantially the same as that of the lens holder 10. The inner circumference of the outer circumferential die C is substantially the same as the outer circumference of the lens holder 10.

A driving mechanism (not shown) enables each of the internal upper die 81 and the external upper die 82 to slide independently and vertically, while the internal lower die 83 and the external lower die 84 are disposed in a fixed state. The internal lower die 83 and the external lower die 84 may also be disposed such that they are vertically slidable.

A process for producing the holder/optical-element assembly 1 with the producing apparatus 80 will now be described. First, the lens-holder material 10a is placed on the holder molding surface 84a of the external lower die 84. The lens-holder material 10a placed is the one preformed into a tubular shape with a certain level of dimensional accuracy, and has the void part 14 including the filling concavities 14a and 14a in the inner circumferential surface 12. The lens material 20a is then placed inside the lens-holder material 10a (Fig. 3A).

While not shown in Fig. 3, a heater is provided around and opposes the lens-holder material 10a. The heater heats the lens-holder material 10a to the softening temperature. The internal lower die 83 and the external lower die 84 are also heated.

The lens material 20a is heated by radiant heat from the external lower die 84, and by transferring heat and radiant heat from the lens-holder material 10a and the internal lower die 83. The lens material 20a is heated to the temperature that is about 30 degrees lower than the softening temperature of the lens-holder material 10a. This temperature is the softening temperature of the lens material 20a, which is, for example, a temperature between the glass transition temperature and the glass softening temperature, and in the vicinity of the glass transition temperature.

That is, the lens material 20a best suited for the intended use is first selected. Then the temperature optimum for press molding is determined within the range between the glass transition temperature and the glass softening temperature of this lens material 20a. The type of the lens-holder material 10a having a softening temperature optimum for the lens material 20a is thus selected. To heat the lens material 20a to a given temperature between the glass transition temperature and the glass softening temperature, the lens-holder material 10a having a softening temperature about 30 degrees higher than the given temperature must be selected.

The lens-holder material 10a and the lens material 20a are press-molded as they reach their softening temperatures (Fig. 3B). In particular, the internal upper die 81 and the external upper die 82 are moved downward by the driving mechanism. This movement allows the holder molding surface 82a of the external upper die 82, the holder molding surface 84a of the external lower die 84, and the outer circumferential die C to transfer their shapes to the lens-holder material 10a placed on the external lower die 84. That is, the holder molding surfaces 82a and 84a define the mounting surfaces 11 and 11 serving as reference surfaces for mounting the lens holder 10 on an optical apparatus along the optical axis. The outer circumferential die C defines the outer-circumferential surface 13 serving as a reference surface for mounting the lens holder 10 on the optical apparatus in the radial direction. Accuracy of the shape of the lens holder 10 thus increases.

The transferring surface 81a of the internal upper die 81 and the transferring surface 83a of the internal lower die 83 transfer the shape of the lens 20 to the lens material 20a. The lens 20 and the lens holder 10 are simultaneously press-molded. Therefore, the mounting surfaces 11 and 11 formed in the lens holder 10 and serving as reference surfaces, and the shaft center of the lens holder 10, coincide with the fitting positions of the lens 20 along the optical axis, and the optical axis, respectively, with high accuracy.

Moreover, when the lens material 20a is press-molded and pressurized, this molding pressure allows the extra amount of the lens material 20a to flow into the void part 14 of the lens holder 10 and thus to form the above-described extra portion 21a. That is, the extra amount of the lens material 20a that is unnecessary for forming the lens 20 is absorbed into the void part 14. The volume error included in the extra amount of the lens material 20a is also absorbed into the void part 14. The resulting lens 20 thus has a high molding accuracy and a desired shape.

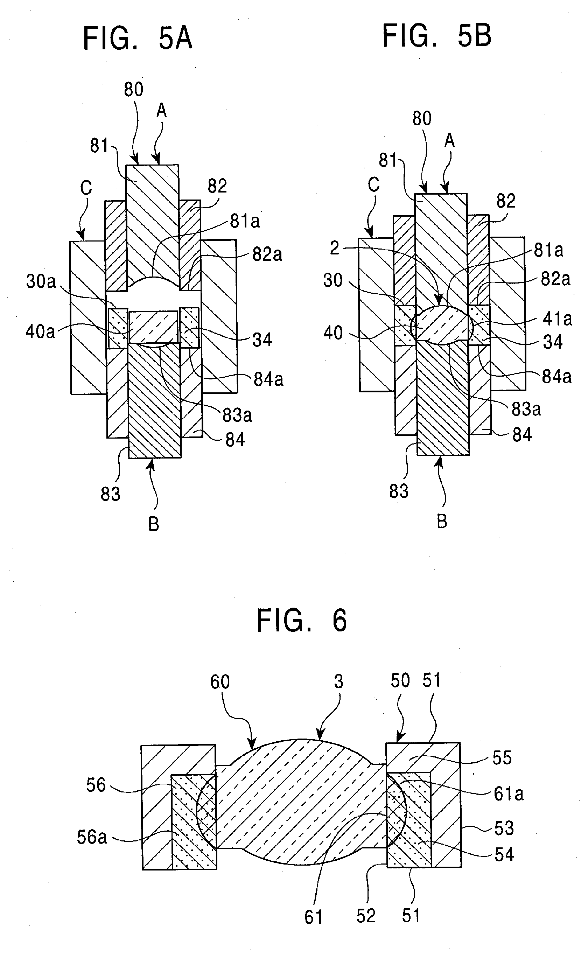

A second embodiment of the present invention will now be described. Fig. 4 is a cross-sectional view of a holder/optical-element assembly according to a second embodiment of the present invention. Figs. 5A and 5B are cross-sectional views showing the production of a holder/optical-element assembly according to the second embodiment of the present invention.

Similarly to the first embodiment, a holder/optical-element assembly 2 of the present embodiment is incorporated, for example, in a pickup head of a CD player or in a digital camera. As shown in Fig. 4, the holder/optical-element assembly 2 has a cylindrical lens holder 30 and a spherical lens 40 placed inside the lens holder 30.

The lens holder 30 is made of, for example, aluminum or stainless steel, and has mounting surfaces 31 and 31, an inner circumferential surface 32, and an outer-circumferential surface 33. The entire lens holder 30 has a void part 34 including many pores 34a and 34a. In particular, a lens-holder material 30a having a void part 34 including pores 34a and 34a, as shown in Fig. 5A, is formed through, for example, a powder sintering process or a foam-metal producing method. The lens holder 30 is formed by press-molding the lens-holder material 30a.

The glass lens 40 is placed inside the lens holder 30. This lens 40 is a biconvex spherical lens and is formed by press-molding a lens material 40a shown in Fig. 5A. The lens 40 is fixed to and integrated with the lens holder 30 by applying pressure created in press-molding. An outer edge 41 of the lens 40 has an extra portion 41a outwardly projected almost entirely from the outer edge 41. This extra portion 41a is retained by the void part 34 described above.

Similarly to the first embodiment, the lens material 40a is designed to have an extra volume in addition to the volume required for forming the lens 40. Then, molding pressure created in press-molding the lens 40 allows an extra amount of the lens material 40a to flow into the void part 14 including the pores 34a and 34a to form the extra portion 41a.

Similarly to the first embodiment, the void part 34 offers flow resistance to the lens material 40a flowing into the void part 34. When the pores 34a and 34a included in the void part 34 have large diameters, the level of flow resistance offered is low. On the other hand, when the pores 34a and 34a included in the void part 34 have small diameters, the level of flow resistance offered is high. The level of flow resistance of the void part 34 must be determined to allow all the extra lens material 40a to flow into the void part 34 under molding pressure, while allowing no more lens material 40a to flow into the void part 34. Similarly to the first embodiment, flow resistance of the void part 34 must be changed depending on the viscosity of the lens material 40a or on the level of molding pressure. In this case, the spatial volume of the void part 34 must be larger than the volume of the extra lens material 40a.

Flow resistance of the void part 34 to the lens material 40a can also be adjusted by changing the radio of the pores 34a to the total capacity of the lens holder 30 (pore ratio). In powder sintering process, the pore ratio preferably ranges from 30 to 60%. In foam-metal producing method, the pore ratio preferably ranges from 50 to 95%. The pores 34a and 34a must have diameters of the order of several to 100 µm and must be serially connected.

A process for producing the holder/optical-element assembly 2 will now be described. A description of the producing apparatus 80 is omitted as it is similar to the above-described first embodiment. First, the lens-holder material 30a is placed on the holder molding surface 84a of the external lower die 84. The lens-holder material 30a placed is the one preformed into a tubular shape with a certain level of dimensional accuracy and has the void part 34 made entirely of the pores 34a and 34a. The lens material 40a is then placed inside the lens-holder material 30a (Fig. 5A).

Subsequently, the lens-holder material 30a and the lens material 40a are heated to their own softening temperatures. Then, the lens-holder material 30a and the lens material 40a are press-molded (Fig. 5B) to form the mounting surfaces 31 and 31 and the outer-circumferential surface 33 in the lens-holder material 30a. The lens 40 is also formed.

Moreover, when the lens material 40a is press-molded and pressurized, the molding pressure allows the extra amount of the lens material 40a to flow into the void part 34 in the inner circumferential surface 32 side of the lens holder 30, and thus to form the above-described extra portion 41a.

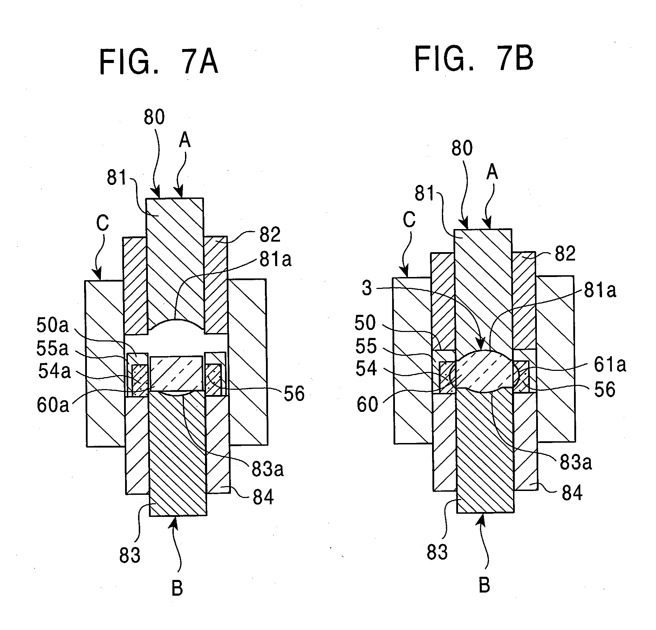

A third embodiment of the present invention will now be described. Fig. 6 is a cross-sectional view showing a holder/optical-element assembly according to a third embodiment of the present invention. Figs. 7A and 7B are cross-sectional views showing the production of a holder/optical-element assembly according to the third embodiment of the present invention.

Similarly to the first and second embodiments, a holder/optical-element assembly 3 of the present embodiment is incorporated, for example, in a pickup head of a CD player or in a digital camera. As shown in Fig. 6, the holder/optical-element assembly 3 has a cylindrical lens holder 50 and a spherical lens 60 placed inside the lens holder 50.

The lens holder 50 is made of, for example, aluminum or stainless steel, and has mounting surfaces 51 and 51, an inner circumferential surface 52, and an outer-circumferential surface 53. The lens holder 50 includes an inner holder portion 54 and an outer holder portion 55. The inner holder portion 54 constitutes a part of one of the mounting surfaces 51 and a part of the inner circumferential surface 52. The inner holder portion 54 has a void part 56 made entirely of a plurality of pores 56a and 56a. In particular, the inner holder portion 54 having a void part 56 including the pores 56a and 56a is formed through, for example, a powder sintering process or a foam-metal producing method. Requirements for the void part 34 are similar to that described in the second embodiment.

The outer holder portion 55 is formed by, for example, a cutting or casting process. The outer holder portion 55 constitutes the outer-circumferential surface 53 and one of the mounting surfaces 51. The outer holder portion 55 ensures the airtightness of the holder/optical-element assembly 3 mounted on an optical apparatus. The airtightness of the holder/optical-element assembly 3 protects the interior of the optical apparatus from damage, such as corrosion, caused by humidity. The inner holder portion 54 is fixed to and integrated with the outer holder portion 55 by, for example, press-fitting or welding. As shown in Fig. 7A, the lens holder 50 is formed by press-molding a lens holder material 50a that is a combination of an outer holder material 55a and an inner holder material 54a having the void part 56 including the pores 56a and 56a.

The glass lens 60 is placed inside the lens holder 50. This lens 60 is a biconvex spherical lens and is formed by press-molding a lens material 60a shown in Fig. 7A. The lens 60 is fixed to and integrated with the lens holder 50 by applying pressure created in press-molding. An outer edge 61 of the lens 60 has an extra portion 61a outwardly projected from a part of the outer edge 61. This extra portion 61a is retained by the void part 56 described above.

Similarly to the first and second embodiments, the lens material 60a is designed to have an extra volume in addition to the volume required for forming the lens 60. Then, molding pressure created in press-molding the lens 60 allows an extra amount of the lens material 60a to flow into the void part 56 including the pores 56a and 56a to form the extra portion 61a.

A process for producing the holder/optical-element assembly 3 will now be described. A description of the producing apparatus 80 is omitted as it is similar to the above-described first and second embodiments. First, the lens-holder material 50a is placed on the holder molding surface 84a of the external lower die 84. The lens material 60a is then placed inside the lens-holder material 50a (Fig. 7A).

Subsequently, the lens-holder material 50a and the lens material 60a are heated to their own softening temperatures. Then, the lens-holder material 50a and the lens material 60a are press-molded (Fig. 7B) to form the mounting surfaces 51 and 51 and the outer-circumferential surface 53 in the lens-holder material 60a. The lens 60 is also formed.

Moreover, when the lens material 60a is press-molded and pressurized, the molding pressure allows the extra amount of lens material 60a to flow into the void part 56 of the lens holder 50, and thus to form the above-described extra portion 61a.

The embodiments of the present invention have been described above. While the methods for producing a spherical convex lens have been described as examples, the application of the present invention is not limited to a lens with such a shape. Alternatively, the present invention may also be applied to lenses with other shapes, such as a concave lens. Moreover, the methods for producing the holder/optical-element assembly according to the present invention are applicable not only to lenses but also to other optical elements, such as a diffraction grating that can be integrally placed in the holder.

## Claims

1. A method for making a holder/optical-element assembly, comprising the steps of:
positioning a cylindrical holder material in a press-molding die, the holder material having a void part in the inner circumferential surface;
positioning an optical-element material inside the holder material;
heating the holder material and the optical-element material to their own softening temperatures; and
press-molding the holder material and the optical-element material, which are heated, to form a cylindrical holder and an optical element, respectively, thereby fixing the optical element to the inside of the holder, allowing a part of the optical element to project outwardly from the outer edge by pressure created in press-molding, and retaining the projected portion in the void part of the holder.

2. A method for making a holder/optical-element assembly according to Claim 1, wherein pressure created in press-molding allows a part of the optical element to flow into the void part of the holder to form the projected portion of the optical element.

3. A method for making a holder/optical-element assembly according to Claim 1, wherein reference surfaces for mounting the above-described holder/optical-element assembly along the optical axis and in the radial direction are formed in the outer surface of the holder by press-molding the holder material.

4. A method for making a holder/optical-element assembly according to Claim 1, wherein an extra amount of the optical-element material is added, in advance, to the volume required for forming the optical element, and pressure created in press-molding allows the extra amount to flow into the void part of the holder to form the projected portion of the optical element.

5. A method for making a holder/optical-element assembly according to Claim 1, wherein the holder material has a filling concavity in the inner circumferential surface, the filling concavity included in the void part for retaining the projected portion of the optical element.

6. A method for making a holder/optical-element assembly according to Claim 1, wherein the holder material has a plurality of micro-pores on the entire inner circumferential surface, the pores included in the void part for retaining the projected portion of the optical element.

7. A method for making a holder/optical-element assembly according to Claim 1, wherein the holder material has a plurality of the micro-pores on a part of the inner circumferential surface, the pores included in a void part for retaining the projected portion of the optical element.
